# EUROPÄISCHE PATENTSCHRIFT

(11) **EP 3 142 892 B1**
(45) Veröffentlichungstag und Bekanntmachung des Hinweises auf die Patenterteilung: **09.05.2018**
(21) Anmeldenummer: 15720576.6
(22) Anmeldetag: 28.04.2015
(51) Int. Cl.: B60N 2/02, B60N 2/62, B64D 11/06, B60N 2/90

(54) **FAHRZEUGSITZ MIT EINSTELLBARER SITZFLÄCHE UND VERFAHREN ZUM VERSTELLEN EINER EINSTELLBAREN SITZFLÄCHE**
VEHICLE SEAT WITH ADJUSTABLE SEATING SURFACE AND METHOD OF ADJUSTING A SEATING SURFACE
SIÈGE DE VÉHICULE DOTÉ D'UNE SURFACE D'ASSISE RÉGLABLE ET UNE METHODE DE REGLER UNE SURFACE D'ASSISE

(30) Priorität: 14.05.2014 EP 14405042
(43) Veröffentlichungstag der Anmeldung: 22.03.2017
(73) Patentinhaber: Lantal Textiles AG, 4901 Langenthal (CH)
(72) Erfinder: VON BALLMOOS, Roland, CH-8703 Erlenbach (CH); GÜHMANN, Andreas, 8322 Madetswil (CH); ROHRBACH, Oliver, CH-4702 Oensingen (CH)
(74) Vertreter: Keller & Partner Patentanwälte AG
(86) Internationale Anmeldenummer: PCT/CH2015/000065
(87) Internationale Veröffentlichungsnummer: WO 2015/172258

(56) Entgegenhaltungen:
- EP-A2- 1 630 031
- WO-A1-00/05998
- DE-A1-102006 037 521
- DE-A1-102009 057 435
- DE-A1-102012 101 433
- DE-C1- 3 631 872

## Beschreibung

### Technisches Gebiet

Die Erfindung betrifft einen Fahrzeugsitz, bei dem sich der Abstand zwischen einer Vorderkante und einer Hinterkante einer Sitzfläche dynamisch verändern lässt.

### Stand der Technik

Auf dem Gebiet der Fahrzeugsitze sind einstellbare Sitzflächen bekannt, insbesondere Sitzflächen, deren Länge sich dynamisch einstellen lassen.

So offenbart beispielsweise die DE 10 2012 009 591 A1 (GM Global Technology) einen Fahrzeugsitz, bei welchem die Ausdehnung der Sitzfläche in Längsrichtung mit einer konstanten Bewegungsgeschwindigkeit verändert werden kann, indem ein Luftbalg aufgeblasen wird. Die Sitzfläche kann in Querrichtung des Sitzes in Sitzteilelemente unterteilt sein, wobei zwischen wenigstens zwei Elementen je ein Luftbalg angeordnet ist. Die Zurückbewegung erfolgt aufgrund eines elastischen Elements, insbesondere einer Feder. Der Luftbalg kann durch Trennwände in mehrere Teilluftkammern unterteilt sein, die bevorzugt kommunizierend ausgebildet sind. Um die Bewegungsrichtung zu kontrollieren, ist wenigstens ein Führungselement am Fahrzeugsitz angeordnet.

Die WO 06/060833 A1 (Greiner Purtec) beschreibt ein Sitzpolster für einen Sitz, insbesondere für einen Flugzeugsitz. Die Sitztiefe lässt sich mit Hilfe eines in seinem Volumen veränderbar ausgebildeten Stellelements anpassen. In einer Ausführungsform ist das Stellelement als in einer Luftkammer ausgebildetes Schaumstoffelement ausgebildet.

Die WO 04/030496 A1 offenbart eine pneumatisch ausfahrbare Vorrichtung, welche an einer Sitzfläche eines Stuhles angebracht werden kann. Die Vorrichtung umfasst einen pneumatischen, harmonikaartig ausfahrbaren Hohlkörper mit welchem zusammen an einer Frontplatte befestigte Führungsmittel ausgefahren werden können. Federelemente werden mit zunehmendem Druck im Hohlkörper gedehnt und ziehen bei Druckentlastung den Hohlkörper wieder zurück.

Die DE 36 31 872 C1 beschreibt einen Fahrzeugsitz mit einer Sitztiefenverlängerung, welche das Sitzkissen in eine Vielzahl von Spalten aufteilt, welche alle dieselbe Breite aufweisen. Die Polsterelemente sind getrennt voneinander auf steifen Tragelementen befestigt, die auf Führungsschienen aufliegen. In den Spalten sind jeweils flexible Luftkammern angeordnet, welche über ein Druckluftsystem aufgeblasen werden können, um die einzelnen Polsterelemente relativ zueinander zu verschieben. Über federelastische Rückstellglieder werden bei entlüfteten Luftkammern die Polsterelemente wieder zueinander gezogen.

Nachteilig an den vorbekannten, verstellbaren Sitzflächen ist, dass eine Bewegung entgegen einer Rückstellkraft rein durch pneumatische Elemente erfolgt, wodurch diese Elemente einen relativ hohen Innendruck aufweisen und sich dadurch für einen Benutzer unangenehm hart anfühlen.

Ferner ist bekannt, dass sich Teile von Sitzflächen durch mechanische Verstellvorrichtungen in mindestens eine Richtung bewegen lassen, um die Abmessungen der Sitzfläche zu vergrössern. Nachteilig ist jedoch, dass sich durch das Verstellen dieser Teile Zwischenräume bilden, welche nicht mehr gepolstert sind. Dadurch kann es zu Beeinträchtigungen des Sitzkomforts kommen.

### Darstellung der Erfindung

Aufgabe der Erfindung ist es, ein dem eingangs genannten technischen Gebiet zugehörender Fahrzeugsitz zu schaffen, der einen möglichst einfachen Aufbau aufweist und welcher eine gute Längenverstellbarkeit bei gleichzeitig hohem Sitzkomfort ermöglicht.

Die Lösung der Aufgabe ist durch die Merkmale des Anspruchs 1 definiert. Gemäss der Erfindung umfasst ein Fahrzeugsitz eine Sitzfläche mit einer Vorderkante und einer Hinterkante sowie eine an der Hinterkante angeordnete und zur Sitzfläche in einem Winkel stehende Rückenlehne. Die Sitzfläche ist in ein Hauptteil und mindestens ein Vorderteil unterteilt. Die beiden Teile sind mittels einer mechanischen Verstellvorrichtung relativ zueinander bewegbar, um einen Abstand zwischen der Vorderkante und der Hinterkante der Sitzfläche dynamisch einstellen zu können. Zwischen dem Hauptteil und dem Vorderteil sind wenigstens zwei aufblasbare Kammern angeordnet, welche in Abhängigkeit des Abstandes der Vorderkante zur Hinterkante aufblasbar und entleerbar sind. Jede der wenigstens zwei Luftkammern verfügt über ein Ventil sowie über einen Drucksensor. Der erfindungsgemässe Fahrzeugsitz umfasst ferner eine Steuerungseinheit, welche die Ventile derart schaltet, dass im Innern der aufblasbaren Kammern stets ein vorgegebener Druck vorherrscht.

Durch die wenigstens zwei aufblasbaren Kammern kann beim Verstellen des Vorderteils relativ zum Hauptteil der Sitzfläche die zwischen diesen Teilen entstehende Lücke gefüllt werden, so dass sich für einen auf der Sitzfläche befindlichen Benutzer unabhängig von Abstand zwischen der Vorderkante und der Hinterkante eine ebene Sitzfläche ergibt. Die wenigstens zwei aufblasbaren Kammern bilden im aufgeblasenen Zustand demnach einen Bestandteil der Sitzfläche. Dadurch, dass im Innern der aufblasbaren Kammern immer derselbe vorgegebene Druck eingehalten wird, fühlen sich diese für einen Benutzer des Fahrzeugsitzes stets gleich hart an, was einen hohen Sitzkomfort gewährleistet.

Der vorgegebene Druck, der im Innern der aufblasbaren Kammern eingehalten werden soll, ist vorzugsweise fix vorgegeben, beispielsweise durch den Hersteller des Fahrzeugsitzes. Insbesondere ist dieser vorgegebene Druck in einem Speicher der Steuerungseinheit hinterlegt. Idealerweise ist der vorgegebene Druck derart gewählt, dass sich die wenigstens zwei aufblasbaren Kammern für einen Benutzer des Fahrzeugsitzes in etwa gleich hart anfühlen wie eine Polsterung des Hauptteils und des mindestens einen Vorderteils.

Alternativ kann auch vorgesehen sein, dass der vorgegebene Druck durch den Benutzer des Fahrzeugsitzes verändert werden kann, insbesondere innerhalb eines bestimmten Druckbereichs. Insbesondere bevorzugt beträgt der vorgegebene Druck 5 kPa (50 Millibar).

Der Winkel zwischen der Sitzfläche und der Rückenlehne kann bevorzugt über einen weiteren Verstellmechanismus verändert werden, so dass sich unterschiedliche Konfigurationen des Fahrzeugsitzes realisieren lassen. Einem Fachmann sind auf dem Gebiet eine Vielzahl an möglichen Verstellmechanismen zur Einstellung des Winkels zwischen einer Sitzfläche und einer Rückenlehne bekannt.

Vorzugsweise umfasst die mechanische Verstellvorrichtung einen elektrischen Motor sowie eine Spindel, mit deren Hilfe sich das Vorderteil relativ zum Hauptteil elektrisch verstellen lässt. Dies erhöht den Komfort eines Benutzers bei der Einstellung einer geeigneten Länge der Sitzfläche. Alternativ kann die Bewegung auch durch andere geeignete Mittel, wie Führungselementen unterstützt werden.

Die wenigstens zwei aufblasbaren Kammern sind bevorzugt als pneumatische Kissen ausgebildet. Je nach der gewünschten maximalen Verstellungslänge können auch mehr als zwei aufblasbare Kammern vorgesehen sein, wie z.B. drei, vier, fünf oder mehr aufblasbare Kammern.

Im Sinne der vorliegenden Anmeldung ist eine "aufblasbare Kammer" ein von einem flexiblen, flächigen Material umgebener Innenraum, welcher mit einem Fluid, insbesondere einem Gas, insbesondere bevorzugt mit Luft gefüllt sein kann. Das flächige Material ist vorzugsweise derart geformt, dass die aufblasbare Kammer bei Erreichen eines maximalen Füllvolumens eine vordefinierte Form aufweist. Bei den aufblasbaren Kammern gemäss der vorliegenden Erfindung ist diese vordefinierte Form vorzugsweise ein Quader.

Bevorzugt ist jede aufblasbare Kammer mit mindestens einer Zuleitung, über welche ein Fluid in die aufblasbare Kammer gefüllt oder aus der Kammer ausgelassen werden kann, verbunden. Diese mindestens eine Zuleitung ist vorzugsweise an wenigstens einen Ventilblock angeschlossen, mit dem sich die mindestens eine Zuleitung mit einer Pumpe oder einem Druckluftsystem verbinden lässt. Vorzugsweise verfügt der wenigstens eine Ventilblock über mehrere Ventile, über welche sich mehrere Zuleitungen selektiv mit mindestens einer Pumpe oder einem Druckluftsystem verbinden lassen. Das Vorsehen eines Ventilblocks reduziert die Komplexität des Aufbaus des Fahrzeugsitzes. Die mindestens eine Zuleitung wird bevorzugt über einen Flansch, der sich auf einer Aussenwandung der aufblasbaren Kammer befindet, mit dieser verbunden. Die zu einem Fahrzeugsitz gehörenden Ventile sind vorzugsweise in einem einzigen Ventilblock zusammengefasst. Dadurch sind diese an einer zentralen Stelle lokalisiert, was deren Wartung und Austausch wesentlich vereinfacht. Ferner wird auch die nötige Verkabelung zwischen der Steuerungseinheit und den Ventilen so wesentlich simpler.

Besonders bevorzugt verfügen die mindestens zwei aufblasbaren Kammern in deren Innenraum über mindestens einen Steg, welcher die Form des flächigen, den Innenraum umgebenden Materials stabilisiert.

Wie ein Fachmann erkennen wird, lässt sich die vorliegende Erfindung auch mit nur einer beziehungsweise mit mehr als zwei aufblasbaren Kammern zwischen dem Vorderteil und dem Hauptteil realisieren. Eine alternativ bevorzugte Ausführungsform umfasst daher nur eine aufblasbare Kammer zwischen Vorderteil und Hauptteil.

Die wenigstens zwei aufblasbaren Kammern sind vorzugsweise über je eine Seitenfläche mechanisch miteinander verbunden. Die Seitenflächen werden bevorzugt miteinander verklebt. Alternativ sind auch andere Verbindungsarten geeignet, wie beispielsweise eine Naht oder ein Haftverschluss, wie beispielsweise ein Klettverschluss. Bevorzugt sind die aufblasbaren Kammern, welche an den Hauptteil beziehungsweise an das Vorderteil der Sitzfläche anliegen, mechanisch mit diesem verbunden, insbesondere über eine Klebeverbindung oder über einen Haftverschluss, insbesondere einen Klettverschluss. Dadurch kann eine durchgehende, für einen Benutzer des Fahrzeugsitzes angenehme Sitzfläche geschaffen werden, d.h. die aufblasbaren Kammern fühlen sich für diesen an, als würden sie einen Teil der Sitzfläche bilden.

Die wenigstens zwei aufblasbaren Kammern sind bevorzugt in Bewegungsrichtung des mindestens einen Vorderteils hintereinander angeordnet. Alternativ kann zwischen den mindestens zwei aufblasbaren Kammern auch mindestens ein weiteres starres Zwischenteil angeordnet sein.

Die wenigstens zwei aufblasbaren Kammern werden vorzugsweise in Bewegungsrichtung des Vorderteils sequentiell aufgeblasen beziehungsweise entleert, so dass zunächst eine aufblasbare Kammer vollständig aufgeblasen wird, bevor eine weitere aufblasbare Kammer aufgeblasen wird. Vorzugsweise erfolgt das Entleeren der aufblasbaren Kammern bei einer Verkleinerung der Sitzfläche in der umgekehrten Reihenfolge des Aufblasens, wobei zunächst eine aufblasbare Kammer vollständig entleert wird, bevor eine weitere aufblasbare Kammer entleert wird.

Die aufblasbaren Kammern weisen vorzugsweise alle dieselben Dimensionen auf. Alternativ können die aufblasbaren Kammern jedoch auch unterschiedliche Dimensionen aufweisen.

Beim Entleeren einer aufblasbaren Kammer wird das in der aufblasbaren Kammer vorhandene Fluid vorzugsweise vollständig abgesaugt, zum Beispiel durch eine Pumpe. Da bei einer Verkleinerung des Abstandes zwischen der Vorderkante und der Hinterkante das für die mindestens zwei aufblasbaren Kammern vorhandene Volumen zwischen dem Vorderteil und dem Hauptteil kleiner wird, wird der Druck im Innern der mindestens zwei Kammern ansteigen. Da die Steuerungsvorrichtung allerdings den Druck im Innern der Kammern konstant hält, wird durch diese das in den Kammern vorhandene Fluid entleert.

Dies geschieht beispielsweise durch Abpumpen mittels einer Pumpe oder durch Öffnen eines Ablassventils, wobei das Fluid durch die Abnahme des Volumens zwischen dem Vorderteil und dem Hauptteil aus den mindestens zwei aufblasbaren Kammern herausgepresst wird.

Als "Fahrzeug" im Sinne der vorliegenden Anmeldung werden sämtliche Beförderungsmittel verstanden, mit denen sich Personen zu Lande, in der Luft oder auf dem Wasser transportieren lassen. Dies sind insbesondere Automobile, Busse, Züge, Flugzeuge, Helikopter, Boote und Schiffe. Dementsprechend wird unter dem Begriff "Fahrzeugsitz" ein Sitz zum Einsatz in einem dieser Fahrzeuge verstanden.

Die Steuerungseinheit ist vorzugsweise derart ausgestaltet, dass das Aufblasen und Entleeren der einzelnen aufblasbaren Kammern mit der Bewegung der Verstellvorrichtung koordiniert erfolgt. Beispielsweise kann bei der Anwesenheit einer durch einen elektrischen Motor angetriebenen Spindel, welche das Vorderteil der Sitzfläche bewegt, das Aufblasen und Entleeren einzelner aufblasbarer Kammern mit der Drehgeschwindigkeit der Spindel oder der Anzahl an Umdrehungen koordiniert werden, so dass ein auf der Sitzfläche sitzender Benutzer stets eine im Wesentlichen gleichmässige Sitzfläche spürt. Dies erlaubt eine möglichst komfortable Bedienung des Fahrzeugsitzes durch einen Benutzer.

Die Steuerungseinheit umfasst vorzugsweise einen Mikrochip, welcher über eine am Fahrzeugsitz angebrachte Bedieneinheit, z.B. in der Form von betätigbaren Knöpfen oder Schaltern, angesteuert wird. Die Steuerungseinheit wirkt entsprechend auf die Verstellvorrichtung ein, um das Vorderteil relativ zum Hauptteil zu bewegen. Beispielsweise kann ein Benutzer eine vorbestimmte Konfiguration des Fahrzeugsitzes, wie z.B. "normale Sitzposition", "Relax" etc. auswählen.

Die Steuerungseinheit ist vorzugsweis derart ausgestaltet, dass die Ventile der wenigstens zwei aufblasbaren Kammern bei Erreichen je eines vorbestimmten Abstandes zwischen der Vorderkante und der Hinterkante geöffnet werden.

Dies vereinfacht die Ausgestaltung des erfindungsgemässen Fahrzeugsitzes, da die Steuerungseinheit lediglich das Erreichen spezifischer Ereignispunkte, nämlich die vorgegebenen Abstände zwischen der Vorderkante und der Hinterkante überwachen muss. Ist ein solcher Abstand erreicht, wird das Ventil der dem Abstand zugeordneten aufblasbaren Kammer geöffnet. Da die Steuerungseinheit den Druck in den wenigstens zwei aufblasbaren Kammern konstant auf den vorgegebenen Druck einstellt, passt sich die Grösse der wenigstens zwei aufblasbaren Kammern dem wachsenden Abstand zwischen dem Vorderteil und dem Hinterteil automatisch an. Dies geschieht, da durch die Vergrösserung des Abstandes die wenigstens zwei aufblasbaren Kammern ein grösseres Volumen zwischen dem mindestens einen Vorderteil und dem Hauptteil zu Verfügung haben. Erhöht sich jedoch das Volumen einer aufblasbaren Kammer bei gleichbleibender Befüllung durch ein Fluid, so verringert sich der im Innern der aufblasbaren Kammer vorherrschende Druck des Fluids. Dies wird durch den Drucksensor registriert, wobei die Steuerungseinheit das zugehörige Ventil so schaltet, dass Fluid in die aufblasbare Kammer strömt, bis im Innern der aufblasbaren Kammer wieder der vorgegebene Druck vorherrscht.

Vorzugsweise ist die Steuerungsvorrichtung weiter derart ausgestaltet, dass diese beim Verkleinern des Abstandes zwischen Vorderkante und Hinterkante bei Erreichen je eines vorbestimmten Abstandes geschlossen werden. Da der Druck im Innern der wenigstens zwei aufblasbaren Kammern stets auf den vorgegebenen Druck gehalten wird, schaltet die Steuerungsvorrichtung die Ventile der wenigstens zwei aufblasbaren Kammern so, dass aus diesen bei sich verringerndem Abstand zwischen der Vorderkante und der Hinterkante Fluid herausgepresst wird.

Vorzugsweise weisen die wenigstens zwei aufblasbaren Kammern eine Aussenwandung mit vorgefertigten Sollfaltstellen auf. Dadurch wird beim Entleeren der aufblasbaren Kammern eine geordnete Faltung ermöglicht, so dass die entleerte aufblasbare Kammer möglichst wenig Platz einnimmt. Ferner kann dadurch auch verhindert werden, dass sich durch eine ungeordnete Faltung der entleerten Kammern auf der Sitzfläche für einen Benutzer unangenehme Faltungen ergeben.

Vorzugsweise umfasst der Fahrzeugsitz mindestens eine Pumpe, welche mit mindestens einer der aufblasbaren Kammern fluidisch verbunden ist. Dies ermöglicht ein möglichst einfaches und schnelles Aufpumpen der aufblasbaren Kammern.

Besonders bevorzugt ist jede der wenigstens zwei aufblasbaren Kammern über eine eigene Zuleitung mit der Pumpe verbunden. Ferner kann die Pumpe derart ausgestaltet sein, dass diese das Fluid nur auf den vorgegebenen Druck komprimieren kann. Dadurch kann innerhalb der wenigstens zwei aufblasbaren Kammern gar nie ein Druck vorherrschen, der höher ist, als der vorgegebene Druck.

Die wenigstens eine Pumpe ist vorzugsweise derart ausgestaltet, dass diese sowohl zum Aufpumpen als auch zum aktiven Entleeren, d.h. zum Absaugen des Fluids in den aufblasbaren Kammern ausgelegt ist.

Vorzugsweise ist über dem Hauptteil, dem Vorderteil sowie den wenigstens zwei aufblasbaren Kammern ein Textilbezug angeordnet, welcher mittels einer unterhalb der Sitzfläche angeordneten Spannvorrichtung, insbesondere in Form einer Zugfeder, unter Zugspannung gehalten wird. Dies ergibt eine für einen Benutzer optisch ansprechende sowie bei Berührung angenehme, einheitliche Oberfläche der Sitzfläche. Durch die Spannvorrichtung wird erreicht, dass bei jedem eingestellten Abstand zwischen der Vorderkante und der Rückkante der Textilbezug unter Spannung steht und sich keine störenden Falten bilden. Alternativ kann der Textilbezug auch aus einem elastischen Textil bestehen, welches sich von selbst an die unterschiedlichen Abstände anpasst.

Die wenigstens zwei aufblasbaren Kammern sind vorzugsweise mit einem feuerhemmenden Gewebe überzogen. Dadurch kann der erfindungsgemässe Fahrzeugsitz die vorgeschriebenen Sicherheitsnormen im Fahrzeugbau, insbesondere für Flugzeuge einhalten.

Besonders bevorzugt umfasst der Fahrzeugsitz zwei Vorderteile sowie ein Hauptteil, wobei zwischen je einem der zwei Vorderteile sowie dem Hauptteil wenigstens zwei aufblasbare Kammern angeordnet sind.

Dadurch kann ein erfindungsgemässer Fahrzeugsitz mit individuell einstellbaren Beinstützen ausgestaltet werden. Dies ist insbesondere bei der Verwendung eines erfindungsgemässen Sitzes als Fahrer- oder Pilotensitz vorteilhaft, da der Benutzer die Beinstützen individuell so einstellen kann, dass am Boden befindliche Pedale bequem erreicht werden können.

Insbesondere bevorzugt ist der Fahrzeugsitz ein Flugzeugsitz. Durch die besonders einfache und gewichtsparende Bauweise weist ein erfindungsgemässer Fahrzeugsitz für den Flugzeuginnenausbau vorteilhafte Eigenschaften auf.

Aus der nachfolgenden Detailbeschreibung und der Gesamtheit der Patentansprüche ergeben sich weitere vorteilhafte Ausführungsformen und Merkmalskombinationen der Erfindung.

Die vorliegende Anmeldung bezieht sich ferner auf ein Verfahren zum Verstellen mindestens eines Vorderteils einer unterteilten Sitzfläche eines Fahrzeugsitzes relativ zu einem Hauptteil. Das erfindungsgemässe Verfahren wird vorzugsweise mit einem oben beschriebenen Fahrzeugsitz ausgeführt.

In einem ersten Schritt des Verfahrens wird das mindestens eine Vorderteil relativ zum Hauptteil durch eine mechanische Verstellvorrichtung bewegt. In einem weiteren Schritt wird mindestens eine von wenigstens zwei aufblasbaren Kammern, welche zwischen dem mindestens einen Vorderteil und dem Hauptteil angeordnet sind, in Abhängigkeit des Abstandes zwischen Vorderkante und Hinterkante mit einem Fluid aufgeblasen. Das Aufblasen erfolgt vorzugsweise durch eine Pumpe. Der Druck innerhalb der wenigstens zwei aufblasbaren Kammern wird je durch einen Drucksensor gemessen, wobei eine Steuerungsvorrichtung den wenigstens zwei aufblasbaren Kammern zugeordnete Ventile derart schaltet, dass stets ein vorgegebener Druck innerhalb der wenigstens zwei aufblasbaren Kammern vorherrscht.

### Kurze Beschreibung der Zeichnungen

Die zur Erläuterung des Ausführungsbeispiels verwendeten Zeichnungen zeigen:
- Fig. 1: Eine schematische Seitenansicht einer ersten Ausführungsform eines erfindungsgemässen Fahrzeugsitzes;
- Fig. 2: eine schematische Seitenansicht des Fahrzeugsitzes aus der Fig. 1 mit aufgeblasenen aufblasbaren Kammern;
- Fig. 3a, 3b: Draufsichten einer Sitzfläche eines Fahrzeugsitzes gemäss der vorliegenden Erfindung;
- Fig. 4a - 4c: Draufsichten einer Sitzfläche einer zweiten Ausführungsform eines erfindungsgemässen Fahrzeugsitzes;
- Fig. 5a, 5b: Draufsichten einer Sitzfläche einer weiteren Ausführungsform mit zwei Vorderteilen.

Grundsätzlich sind in den Figuren gleiche Teile mit gleichen Bezugszeichen versehen.

### Wege zur Ausführung der Erfindung

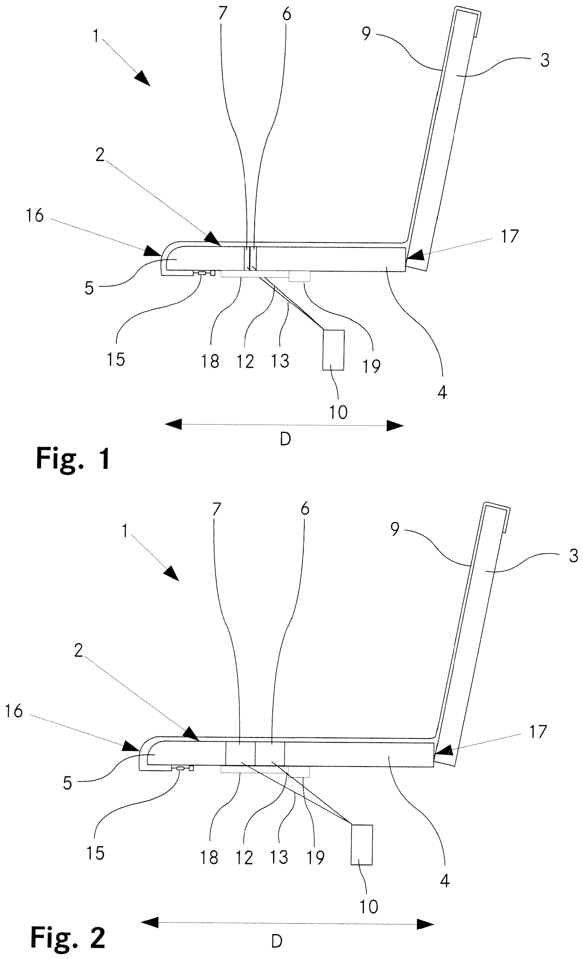

Die Figur 1 zeigt eine schematische Seitenansicht einer ersten Ausführungsform des erfindungsgemässen Fahrzeugsitzes 1. Zur Vereinfachung der Darstellung wird kein Unterbau des Fahrzeugsitzes 1 gezeigt.

Der Fahrzeugsitz 1 umfasst eine Sitzfläche 2 sowie eine Rückenlehne 3. Die Rückenlehne 3 ist an einer Hinterkante 17 der Sitzfläche 2 angeordnet und weist einen Winkel gegenüber der Sitzfläche 2 auf. Bevorzugt lässt sich der Winkel zwischen Rückenlehne 3 und Sitzfläche 2 über einen Mechanismus (nicht gezeigt) verändern.

Die Sitzfläche 2 verfügt über einen Hauptteil 4 und über einen Vorderteil 5. Das Vorderteil 5 umfasst eine Vorderkante 16 der Sitzfläche 2, welche bei der gezeigten Ausführungsform zur Verbesserung des Komforts eines Benutzers des Fahrzeugsitzes 1 abgerundet ausgestaltet ist. Zwischen dem Hauptteil 4 und dem Vorderteil 5 sind zwei aufblasbare Kammern 6, 7 angeordnet. In der Fig. 1 sind beide aufblasbaren Kammern 6, 7 im leeren Zustand dargestellt. Die Sitzfläche 2 weist den kleinsten möglichen Abstand D zwischen der Vorderkante 16 und der Hinterkante 17 auf. Jede aufblasbare Kammer 6, 7 ist über eine Zuleitung 12, 13 mit einer Pumpe 10 verbunden.

Über die Sitzfläche 2 sowie über die Rückenlehne 3 ist ein Textilbezug 9 angeordnet. Der Textilbezug 9 ist an der Unterseite des Vorderteils 5 der Sitzfläche 2 mit einer Spannvorrichtung 15 verbunden, welche den Textilbezug 9 in jedem Abstand zwischen Vorderkante 16 und Hinterkante 17 über der Sitzfläche 2 spannt. Die Spannvorrichtung 15 kann beispielsweise als Zugfeder ausgebildet sein. Zusätzlich ist der Textilbezug 9 an der Rückseite der Rückenlehne 3 befestigt. Je nach Ausgestaltung des Fahrzeugsitzes kann der Textilbezug 9 an weiteren Stellen mit der Sitzfläche 2 und/oder der Rückenlehne 3 befestigt sein.

Ferner verfügt der erfindungsgemässe Fahrzeugsitz über eine mechanische Verstellvorrichtung, mit welcher sich der Abstand zwischen Vorderkante 16 und Hinterkante 17 verändern lässt. Die mechanische Verstellvorrichtung umfasst eine Spindel 18 sowie einen Spindelantrieb 19. Durch Drehung der Spindel 18 mittels des Spindelantriebes 19 lässt sich der Abstand D zwischen der Vorderkante 16 und der Hinterkante 17 verändern.

Die Figur 2 zeigt den Fahrzeugsitz aus der Fig. 1 in einer schematischen Seitenansicht, wobei der Abstand D zwischen der Vorderkante 16 und der Hinterkante 17 der Sitzfläche 2 durch Drehung der Spindel 18 vergrössert wurde, d.h. die Sitzfläche 2 ist gegenüber der Darstellung der Fig. 1 verlängert.

Die erste aufblasbare Kammer 6 sowie die zweite aufblasbare Kammer 7 sind im vollständig aufgeblasenen Zustand dargestellt. Die beiden aufblasbaren Kammern 6, 7 sind in Abhängigkeit des Abstandes zwischen Vorderkante 16 und Hinterkante 17 selektiv aufgeblasen worden. Das Aufblasen wird vorzugsweise über eine Kontrolleinheit (nicht gezeigt) gesteuert. Durch das selektive Aufblasen der beiden aufblasbaren Kammern 6, 7 kann eine entstehende Lücke zwischen dem Hauptteil 4 und dem Vorderteil 5 gefüllt werden, so dass für einen Benutzer eine durchgehende Sitzfläche 2 vorliegt. Dabei ist die Kontrolleinheit derart ausgestaltet, dass im Innern der aufblasbaren Kammern 6, 7 ein konstanter, vorbestimmter Druck eingehalten wird. Dies wird vorzugsweise durch entsprechendes Ansteuern von Ventilen (nicht dargestellt) erreicht. Die Kontrolleinheit ist ferner derart ausgestaltet, dass bei Erreichen von vorbestimmten Abständen zwischen der Vorderkante 16 und der Hinterkante 17 einzelne aufblasbare Luftkammern 6, 7 durch die Pumpe aufgeblasen werden. Dies wird beispielsweise dadurch erreicht, dass ein entsprechendes Ventil geöffnet wird, so dass die Pumpe 10 die entsprechende aufblasbare Kammer 6, 7 mit dem Fluid aufblasen kann. Dadurch, dass der Druck im Innern der aufblasbaren Luftkammern 6, 7 konstant gehalten wird, passen sich diese an den gerade vorherrschenden Abstand zwischen der Vorderkante 16 und der Hinterkante 17 an, wobei sich diese für einen auf dem Fahrzeugsitz 1 sitzenden Benutzer stets gleich hart anfühlen.

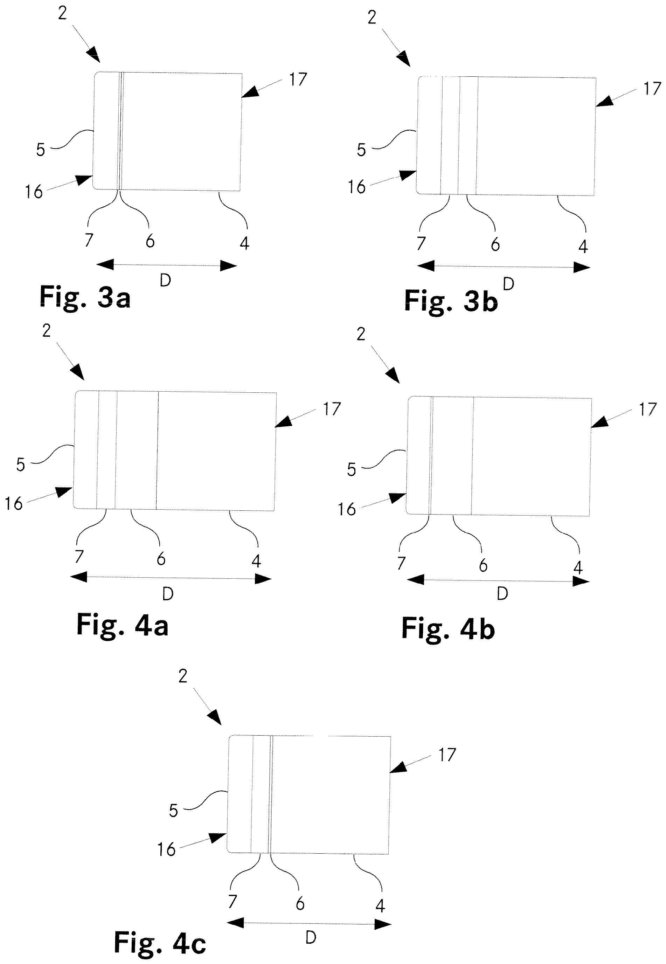

Die Figuren 3a, 3b zeigen eine Draufsicht auf eine Sitzfläche 2 eines erfindungsgemässen Fahrzeugsitzes 1 mit unterschiedlichen Abständen D zwischen der Vorderkante 16 und der Hinterkante 17. Die Fig. 3a stellt eine Sitzfläche 2 mit einem minimalen Abstand D dar, wobei die aufblasbaren Kammern 6, 7 vollständig entleert sind. Die Fig. 3b zeigt die Sitzfläche 2 mit maximalem Abstand D zwischen Vorderkante 16 und Hinterkante 17, wobei die aufblasbaren Kammern 6, 7 vollständig aufgeblasen sind. Gut ersichtlich ist die Vergrösserung des Abstandes D zwischen der Vorderkante 16 und der Hinterkante 17.

Die Figuren 4a bis 4c zeigen eine Sitzfläche 2 einer zweiten Ausführungsform eines erfindungsgemässen Fahrzeugsitzes 1. In dieser Ausführungsform weisen die beiden aufblasbaren Kammern 6, 7 unterschiedliche Grössen auf. Durch selektives Aufblasen der ersten aufblasbaren Kammer 6 und/oder der zweiten aufblasbaren Kammer 7 lassen sich so unterschiedliche Lücken zwischen dem Hauptteil 4 und dem Vorderteil 5 der Sitzfläche 2 überbrücken, welche auf unterschiedliche Einstellungen des Abstandes D zwischen Vorderkante 16 und Hinterkante 17 entstehen. Ein Fachmann wird erkennen, dass nebst einer Variation der Grösse der aufblasbaren Kammern 6, 7 auch eine Variation von deren Anzahl möglich ist.

Die Figur 4a stellt die Sitzfläche 2 mit vollständig aufgeblasenen aufblasbaren Kammern 6, 7 dar, während die Figur 4b die Sitzfläche 2 nur bei aufgeblasener erster aufblasbarer Kammer 6 zeigt. Die Figur 4c zeigt die Sitzfläche 2 nur mit vollständig aufgeblasener zweiter Kammer 7.

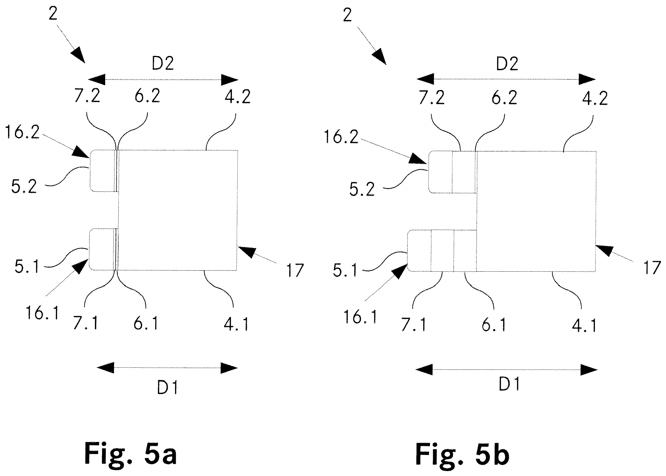

Die Figuren 5a und 5b zeigen Draufsichten der Sitzfläche 2 einer weiteren Ausführungsform eines erfindungsgemässen Fahrzeugsitzes 1. Bei dieser Ausführungsform weist die Sitzfläche 2 ein Hauptteil 4 sowie zwei Vorderteile 5.1, 5.2 auf. Zwischen dem Hauptteil 4 und den beiden Vorderteilen 5.1, 5.2 sind je zwei aufblasbare Kammern 6.1, 6.2, 7.1, 7.2 angeordnet. Dementsprechend weist der Fahrzeugsitz 1 zwei Verstellvorrichtungen auf, mit welchen sich die beiden Abstände D1 und D2 individuell einstellen lassen. Bei dieser Ausführungsform des erfindungsgemässen Fahrzeugsitzes 1 lassen sich die beiden Vorderteile 5.1, 5.2 als einstellbare Beinstützen einsetzen. Wie die Figur 5b zeigt, lassen sich für jedes Vorderteil unterschiedliche Abstände D1, D2 zwischen den jeweiligen Vorderkanten 16.1, 16.2 und der Hinterkante 17 der Sitzfläche 2 einstellen.

## Patentansprüche

1. Fahrzeugsitz umfassend eine Sitzfläche (2) mit einer Vorderkante (16; 16.1, 16.2) und einer Hinterkante (17) sowie eine an der Hinterkante (17) angeordnete und zur Sitzfläche (2) in einem Winkel stehende Rückenlehne (3), wobei die Sitzfläche (2) in ein Hauptteil (4) und mindestens ein Vorderteil (5; 5.1, 5.2) unterteilt ist, die mittels einer mechanischen Verstellvorrichtung relativ zueinander bewegbar sind, um einen Abstand (D; D1, D2) zwischen der Vorderkante (16; 16.1, 16.2) und der Hinterkante (17) dynamisch einstellen zu können, **dadurch gekennzeichnet, dass** zwischen dem Hauptteil (4) und dem mindestens einen Vorderteil (5; 5.1, 5.2) wenigstens zwei aufblasbare Kammern (6, 7; 6.1, 6.2, 7.1, 7.2) angeordnet sind, welche in Abhängigkeit des Abstandes (D; D1, D2) der Vorderkante (16; 16.1, 16.2) zur Hinterkante (17) aufblasbar und entleerbar sind, wobei jede der wenigstens zwei aufblasbaren Kammern (6, 7; 6.1, 6.2, 7.1, 7.2) über ein Ventil sowie über einen Drucksensor verfügt und der Fahrzeugsitz eine Steuerungseinheit aufweist, welche die Ventile derart schaltet, dass im Innern der aufblasbaren Kammern ein vorgegebener Druck vorherrscht.

2. Fahrzeugsitz gemäss Anspruch 1, **dadurch gekennzeichnet, dass** die Steuerungseinheit derart ausgestaltet ist, dass das Aufblasen und Entleeren der wenigstens zwei aufblasbaren Kammern (6, 7; 6.1, 6.2, 7.1, 7.2) mit der Bewegung der mechanischen Verstellvorrichtung koordiniert erfolgt.

3. Fahrzeugsitz gemäss einem der Ansprüche 1 oder 2, **dadurch gekennzeichnet, dass** die Steuerungseinheit derart ausgestaltet ist, dass die Ventile der wenigstens zwei aufblasbaren Kammern beim Vergrössern des Abstandes zwischen der Vorderkante und der Hinterkante bei Erreichen je eines vorbestimmten Abstandes geöffnet werden.

4. Fahrzeugsitz gemäss einem der Ansprüche 1 bis 3, **dadurch gekennzeichnet, dass** die wenigstens zwei aufblasbaren Kammern (6, 7; 6.1, 6.2, 7.1, 7.2) eine Aussenwandung mit vorgefertigten Sollfaltstellen aufweisen.

5. Fahrzeugsitz gemäss einem der Ansprüche 1 bis 4, **dadurch gekennzeichnet, dass** der Fahrzeugsitz (1) mindestens eine Pumpe (10) umfasst, welche mit den mindestens zwei aufblasbaren Kammern (6, 7; 6.1, 6.2, 7.1, 7.2) fluidisch verbunden ist.

6. Fahrzeugsitz gemäss Anspruch 5, **dadurch gekennzeichnet, dass** die Pumpe (10) derart ausgestaltet ist, dass diese die mindestens zwei aufblasbaren Kammern (6, 7; 6.1, 6.2, 7.1, 7.2) sowohl aufpumpen wie auch entleeren kann.

7. Fahrzeugsitz gemäss einem der Ansprüche 1 bis 6, **dadurch gekennzeichnet, dass** über dem Hauptteil (4), dem mindestens einen Vorderteil (5; 5.1, 5.2) sowie den wenigstens zwei aufblasbaren Kammern (6, 7; 6.1, 6.2, 7.1, 7.2) ein Textilbezug (9) angeordnet ist, welcher mittels einer unterhalb der Sitzfläche (2) angeordneten Spannvorrichtung (15), insbesondere in Form eine Zugfeder, unter Zugspannung gehalten wird.

8. Fahrzeugsitz gemäss einem der Ansprüche 1 bis 7, **dadurch gekennzeichnet, dass** die wenigstens zwei aufblasbaren Kammern (6, 7; 6.1, 6.2, 7.1, 7.2) mit einem feuerhemmenden Gewebe überzogen sind.

9. Fahrzeugsitz gemäss einem der Ansprüche 1 bis 8, **dadurch gekennzeichnet, dass** der Fahrzeugsitz (1) zwei Vorderteile (5.1, 5.2) sowie ein Hauptteil (4) umfasst, wobei zwischen je einem der zwei Vorderteile (5.1, 5.2) sowie dem Hauptteil (4) wenigstens zwei aufblasbare Kammern (6.1, 6.2, 7.1, 7.2) angeordnet sind.

10. Fahrzeugsitz gemäss einem der Ansprüche 1 bis 9, **dadurch gekennzeichnet, dass** der Fahrzeugsitz (1) ein Flugzeugsitz ist.

11. Verfahren zum Verstellen mindestens eines Vorderteils einer unterteilten Sitzfläche eines Fahrzeugsitzes, insbesondere gemäss einem der Ansprüche 1 bis 10, relativ zu einem Hauptteil der Sitzfläche, umfassend die Schritte:
a) Bewegen des mindestens einen Vorderteils relativ zum Hauptteil durch eine mechanische Verstellvorrichtung;
b) Aufblasen mindestens eines von wenigstens zwei zwischen dem mindestens einen Vorderteil und dem Hauptteil aufblasbaren Kammern mit einem Fluid, insbesondere durch eine Pumpe, in Abhängigkeit des Abstandes (D; D1, D2) der Vorderkante (16; 16.1, 16.2) zur Hinterkante (17);
c) **dadurch gekennzeichnet, dass** der Druck innerhalb der wenigstens zwei aufblasbaren Kammern (6, 7; 6.1, 6.2, 7.1, 7.2) je durch einen Drucksensor gemessen wird und eine Steuerungseinrichtung den aufblasbaren Kammern (6, 7; 6.1, 6.2, 7.1, 7.2) zugeordnete Ventile derart stellt, dass stets ein vorgegebener Druck innerhalb der wenigstens zwei aufblasbaren Kammer (6, 7; 6.1, 6.2, 7.1, 7.2) vorherrscht.

## Claims

1. Vehicle seat comprising a seating surface (2), which has a front edge (16; 16.1, 16.2) and a rear edge (17), and a backrest (3) arranged at the rear edge (17) and situated at an angle to the seating surface (2), wherein the seating surface (2) is divided into a main part (4) and at least one front part (5; 5.1, 5.2), which can be moved relative to one another by means of a mechanical adjusting device to enable a distance (D; D1, D2) between the front edge (16; 16.1, 16.2) and the rear edge (17) to be adjusted dynamically, **characterized in that** at least two inflatable chambers (6, 7; 6.1, 6.2, 7.1, 7.2) are arranged between the main part (4) and the at least one front part (5; 5.1, 5.2), which chambers can be inflated and emptied in accordance with the distance (D; D1, D2) of the front edge (16; 16.1, 16.2) from the rear edge (17), wherein each of the at least two inflatable chambers (6, 7; 6.1, 6.2, 7.1, 7.2) has a valve and a pressure sensor, and the vehicle seat has a control unit, which switches the valves in such a way that a predetermined pressure prevails within the inflatable chambers.

2. Vehicle seat according to Claim 1, **characterized in that** the control unit is configured in such a way that the inflation and emptying of the at least two inflatable chambers (6, 7; 6.1, 6.2, 7.1, 7.2) takes place in a manner coordinated with the movement of the mechanical adjusting device.

3. Vehicle seat according to one of Claims 1 or 2, **characterized in that** the control unit is configured in such a way that the valves of the at least two inflatable chambers are opened as the distance between the front edge and the rear edge is enlarged in each case when a predetermined distance is reached.

4. Vehicle seat according to one of Claims 1 to 3, **characterized in that** the at least two inflatable chambers (6, 7; 6.1, 6.2, 7.1, 7.2) have an outer wall with predetermined folding locations produced in advance.

5. Vehicle seat according to one of Claims 1 to 4, **characterized in that** the vehicle seat (1) comprises at least one pump (10), which is connected fluidically to the at least two inflatable chambers (6, 7; 6.1, 6.2, 7.1, 7.2).

6. Vehicle seat according to Claim 5, **characterized in that** the pump (10) is configured in such a way that it can both inflate and empty the at least two inflatable chambers (6, 7; 6.1, 6.2, 7.1, 7.2).

7. Vehicle seat according to one of Claims 1 to 6, **characterized in that** a textile cover (9) is arranged over the main part (4), the at least one front part (5; 5.1, 5.2) and the at least two inflatable chambers (6, 7; 6.1, 6.2, 7.1, 7.2), which cover is held under tension by means of a tensioning device (15) arranged underneath the seating surface (2), in particular in the form of a tension spring.

8. Vehicle seat according to one of Claims 1 to 7, **characterized in that** the at least two inflatable chambers (6, 7; 6.1, 6.2, 7.1, 7.2) are covered with a fire-retardant fabric.

9. Vehicle seat according to one of Claims 1 to 8, **characterized in that** the vehicle seat (1) comprises two front parts (5.1, 5.2) and a main part (4), wherein at least two inflatable chambers (6.1, 6.2, 7.1, 7.2) are arranged between in each case one of the two front parts (5.1, 5.2) and the main part (4).

10. Vehicle seat according to one of Claims 1 to 9, **characterized in that** the vehicle seat (1) is an aircraft seat.

11. Method for adjusting at least one front part of a split seating surface of a vehicle seat, in particular according to one of Claims 1 to 10, relative to a main part of the seating surface, comprising the following steps:
a) moving the at least one front part relative to the main part by means of a mechanical adjusting device;
b) using a fluid to inflate at least one of at least two chambers that can be inflated between the at least one front part and the main part, in particular by means of a pump, in accordance with the distance (D; D1, D2) of the front edge (16; 16.1, 16.2) from the rear edge (17);
c) **characterized in that** the pressure within the at least two inflatable chambers (6, 7; 6.1, 6.2, 7.1, 7.2) is in each case measured by a pressure sensor, and a control device sets valves associated with the inflatable chambers (6, 7; 6.1, 6.2, 7.1, 7.2) in such a way that a predetermined pressure prevails at all times within the at least two inflatable chambers (6, 7; 6.1, 6.2, 7.1, 7.2).

## Revendications

1. Siège de véhicule comprenant une surface d'assise (2) avec une arête avant (16 ; 16.1, 16.2) et une arête arrière (17) ainsi qu'un dossier (3) disposé au niveau de l'arête arrière (17) et incliné suivant un certain angle par rapport à la surface d'assise (2), la surface d'assise (2) étant divisée en une partie principale (4) et au moins une partie avant (5; 5.1, 5.2), qui peuvent être déplacées l'une par rapport à l'autre au moyen d'un dispositif de réglage mécanique, afin de pouvoir être ajustées dynamiquement d'une distance (D ; D1, D2) entre l'arête avant (16 ; 16.1, 16.2) et l'arête arrière (17), **caractérisé en ce qu'**entre la partie principale (4) et l'au moins une partie avant (5 ; 5.1, 5.2) sont disposées au moins deux chambres gonflables (6, 7 ; 6.1, 6.2, 7.1, 7.2) qui, en fonction de la distance (D ; D1, D2) de l'arête avant (16 ; 16.1, 16.2) à l'arête arrière (17) peuvent être gonflées et dégonflées, chacune des au moins deux chambres gonflables (6, 7 ; 6.1, 6.2, 7.1, 7.2) disposant d'une valve ainsi que d'un capteur de pression et le siège de véhicule présentant une unité de commande qui connecte les valves de telle sorte qu'il règne une pression prédéfinie à l'intérieur des chambres gonflables.

2. Siège de véhicule selon la revendication 1, **caractérisé en ce que** l'unité de commande est configurée de telle sorte que le gonflage et le dégonflage des au moins deux chambres gonflables (6, 7 ; 6.1, 6.2, 7.1, 7.2) s'effectue de manière coordonnée avec le déplacement du dispositif de réglage mécanique.

3. Siège de véhicule selon l'une quelconque des revendications 1 ou 2, **caractérisé en ce que** l'unité de commande est configurée de telle sorte que les valves des au moins deux chambres gonflables, lors de l'augmentation de la distance entre l'arête avant et l'arête arrière, soient ouvertes lorsqu'une distance prédéterminée est atteinte.

4. Siège de véhicule selon l'une quelconque des revendications 1 à 3, **caractérisé en ce que** les au moins deux chambres gonflables (6, 7 ; 6.1, 6.2, 7.1, 7.2) présentent une paroi extérieure avec des zones de plis de consigne préfabriquées.

5. Siège de véhicule selon l'une quelconque des revendications 1 à 4, **caractérisé en ce que** le siège de véhicule (1) comprend au moins une pompe (10) qui est connectée fluidiquement aux au moins deux chambres gonflables (6, 7 ; 6.1, 6.2, 7.1, 7.2).

6. Siège de véhicule selon la revendication 5, **caractérisé en ce que** la pompe (10) est configurée de telle sorte qu'elle puisse gonfler et dégonfler les au moins deux chambres gonflables (6, 7 ; 6.1, 6.2, 7.1, 7.2).

7. Siège de véhicule selon l'une quelconque des revendications 1 à 6, **caractérisé en ce qu'**un revêtement textile (9) est disposé sur la partie principale (4), l'au moins une partie avant (5 ; 5.1, 5.2) ainsi que les au moins deux chambres gonflables (6, 7 ; 6.1, 6.2, 7.1, 7.2), lequel est retenu par une tension de traction, au moyen d'un dispositif de tensionnement (15), en particulier sous la forme d'un ressort de traction, disposé en dessous de la surface d'assise (2).

8. Siège de véhicule selon l'une quelconque des revendications 1 à 7, **caractérisé en ce que** les au moins deux chambres gonflables (6, 7 ; 6.1, 6.2, 7.1, 7.2) sont revêtues d'un tissu ignifuge.

9. Siège de véhicule selon l'une quelconque des revendications 1 à 8, **caractérisé en ce que** le siège de véhicule (1) comprend deux parties avant (5.1, 5.2) ainsi qu'une partie principale (4), au moins deux chambres gonflables (6.1, 6.2, 7.1, 7.2) étant disposées entre chacune des deux parties avant (5.1, 5.2) et la partie principale (4) .

10. Siège de véhicule selon l'une quelconque des revendications 1 à 9, **caractérisé en ce que** le siège de véhicule (1) est un siège d'avion.

11. Procédé pour régler au moins une partie avant d'une surface d'assise divisée d'un siège de véhicule, en particulier selon l'une quelconque des revendications 1 à 10, par rapport à une partie principale de la surface d'assise, comprenant les étapes suivantes :
a) déplacement de l'au moins une partie avant par rapport à la partie principale par un dispositif de réglage mécanique ;
b) gonflage d'au moins une d'au moins deux chambres gonflables entre l'au moins une partie avant et la partie principale avec un fluide, en particulier au moyen d'une pompe, en fonction de la distance (D ; D1, D2) de l'arête avant (16 ; 16.1, 16.2) à l'arête arrière (17) ;
c) **caractérisé en ce que** la pression à l'intérieur des au moins deux chambres gonflables (6, 7 ; 6.1, 6.2, 7.1, 7.2) est mesurée au moyen d'un capteur de pression respectif et un dispositif de commande règle des valves associées aux chambres gonflables (6, 7 ; 6.1, 6.2, 7.1, 7.2) de telle sorte qu'il règne toujours une pression prédéfinie à l'intérieur des au moins deux chambres gonflables (6, 7 ; 6.1, 6.2, 7.1, 7.2).
